(19) Europäisches Patentamt
European Patent Office
Office européen des brevets

(11) Veröffentlichungsnummer: **0 003 735**
**B1**

(12) # EUROPÄISCHE PATENTSCHRIFT

(45) Veröffentlichungstag der Patentschrift: **13.05.81**

(51) Int. Cl.³: **C 08 F 4/32** //C08F283/00

(21) Anmeldenummer: **78101629.0**

(22) Anmeldetag: **09.12.78**

(54) **Initiatormischungen bestehend aus organischen Peroxiden und substituierten Diphenyläthanen und Verfahren zur Phlegmatisierung organischer Peroxide durch die Herstellung solcher Mischungen.**

(30) Priorität: **22.12.77 DE 2757442**

(43) Veröffentlichungstag der Anmeldung:
**05.09.79 Patentblatt 79/18**

(45) Bekanntmachung des Hinweises auf die Patenterteilung:
**13.05.81 Patentblatt 81/19**

(84) Benannte Vertragsstaaten:
**BE CH DE FR GB IT NL**

(56) Entgegenhaltungen:
**DE - A - 2 444 252**

(73) Patentinhaber: **BAYER AG**
**Zentralbereich Patente, Marken und Lizenzen**
**D-5090 Leverkusen 1, Bayerwerk (DE)**

(72) Erfinder: **Wolfers, Heinrich, Dr.**
**Niederend 6**
**D-4137 Rheurdt (DE)**
Erfinder: **Walter, Oskar, Ing.-grad.**
**Buscher Holzweg 16**
**D-4150 Krefeld (DE)**
Erfinder: **Rudolph, Hans, Dr.**
**Haydnstrasse 9**
**D-4150 Krefeld 1 (DE)**
Erfinder: **Rosenkranz, Hans Jürgen, Dr.**
**Heinrich-Kauert-Weg 9**
**D-4150 Krefeld (DE)**

**EP 0 003 735 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Initiatormischungen bestehend aus organischen Peroxiden und substituierten Diphenyläthanen und Verfahren zur Phlegmatisierung organischer Peroxide durch die Herstellung solcher Mischungen

Zur Initierung radikalischer Polymerisationen können organische Peroxide benutzt werden. Diese zerfallen bei einer für jedes Peroxid charakeristischen Temperatur mit einer charakteristischen Halbwertzeit exotherm in Radikale, die die Polymerisation auslösen. Der exotherme Zerfall kann explosionsartig sein. Er kann durch Beschleuniger, z.B. Cobaltsalze, Vanadinsalze, Amine sowie durch Verunreinigungen z.B. Metallspäne, Rost, stark katalysiert werden. Peroxide können auch durch Schlag, Stoß oder Reibung explodieren.

Man versucht, der mit der Handhabung dieser Stoffe verbundenen Gefahr zu begegnen, indem man Peroxide in Form von Pasten, verdünnten Lösungen oder feuchten Pulvern in den Handel bringt. Als Träger für pasten dienen meist Kieselsäurederivate und als Lösungsmittel meist Phthalsäureester (Dimethylphthalat, Dibutylphthalat, Dioctylphthalat) oder hochsiedende aliphatische Kohlenwasserstoffe. Diese Lieferformen sind jedenfalls bei hochreaktiven Peroxiden immer noch brisant; weiter verdünnen kann man die Peroxide aber nicht, weil sonst die Eigenschaften der mit ihnen hergestellten Polymerisate leiden (die Lösungsmittel haben beispielsweise Weichmachereigenschaften).

Mittel, mit denen man die Gefährlichkeit von Peroxiden herabsetzt, bezeichnet man auch als Phlegmatisierungsmittel. Die Handhabungssicherheit von Peroxiden mit niedrigen Zerfalltemperaturen (z.B. von Percarbonaten) kann man nicht durch Zufügen von Peroxiden mit hohen Zerfalltemperaturen, also mit quasi "reaktiven" Phlegmatisierungsmitteln verbessern. Bereits wenige aus dem Peroxid mit niedriger Zerfalltemperatur entstandene Radikale genügen, um auch das stabilere Peroxid zerfallen zu lassen.

Der Erfindung liegt die Erkenntnis zugrunde, daß der Zusatz von Diphenyläthanderivaten zu organischen Peroxiden deren radikalinduzierte spontane Zersetzung verhindert.

Gegenstand der Erfindung sind demnach als Initiatoren für radikalische Polymerisationen wirksame Mischungen aus

1.) 1—99 Gew.-%, bevorzugt 40—99 Gew.-% eines substituierten Diphenyläthans und

2.) 99—1 Gew.-%, bevorzugt 60—1 Gew.-% eines organischen Peroxids.

In diesen Initiatoren bleibt der induzierte Zerfall der Radikalbildner aus, obwohl sie aus einem Peroxid und einem Radikalbildner vom Diphenylaethantyp zusammengesetzt sind.

Substituierte Diphenyläthane (1) sind bekannt und werden selbst als Initiatoren für radikalische Polymerisationen eingesetzt (vgl. DT—B 1 216 877; DT—A 2 131 633; 2 164 482; 2 444 252; 2 545 451; US—A 3 896 099; GB—A 1 475 618).

Leicht zugängliche substituierte Diphenyläthane wirken allerdings erst bei recht hohen Temperaturen als Polymerisationsinitiatoren, die schon bei niederen Temperaturen wirksamen Diphenyläthane sind dagegen schwer zugänglich und teuer. Durch die Kombination der substituierten Diphenyläthane und der organischen Peroxide kommt man zu hochwirksamen, leicht zugänglichen und weniger gefährlichen Katalysatoren, die bereits bei niedrigen Temperaturen katalytisch wirken.

Erfindungsgemäß sind grundsätzlich alle substituierten 1,2-Diphenyläthane geeignet, insbesondere solche, die bei 70° bis 250°C, bevorzugt 70 bis 170°C, zur Auslösung radikalischer Polymerisationen benutzt werden können. Beispiele sind Acetophenonpinakol, Benzpinakol, 3,4-Di-phenyl-3,4-dimethylhexan; 1,2-Dichlortetraphenyläthan; Tetraphenylbernsteinsäuredinitril; 1,2-Dicyano-1,2-diphenylbernsteinsäuredinitril, 1,2-Dicyano-1,2-diphenylbernsteinsäureester und Benzpinakolalkyl- bzw. silyläther.

Organische Peroxide im Sinne der Erfindung sind bevorzugt solche, die bei 0 bis 250°C, vorzugsweise 40—180°C, in Radikale zerfallen und zur Auslösung radikalischer Polymerisation verwendet werden können. Beispiele sind Sulfonylperoxide wie Acetylcyclohexansulfonylperoxid; Percarbonate wie Di-cyclohexylperoxidicarbonat; Di-n-butyl-peroxidicarbonat und Di-isopropyl-peroxidicarbonat; Perester wie tert.-Butylperoxipivalat, tert.-Butyl-perneodecanoat und tert.-Butylperbenzoat; Diacylperoxide wie Bis-(3,3,5-trimethylhexanonyl)-peroxid; Di-lauroylperoxid; Di-decanoylperoxid; Dipropionylperoxid; Bis-(dichlorbenzoyl)-peroxid und Di-benzoylperoxid; Dialkylperoxide wie Dicumylperoxid und Di-tert.-butylperoxid; Ketalperoxide wie 1,1-Di-tert.-butylperoxi-3,3,5-trimethylcyclohexan; Alkylhydroperoxide wie Cumolhydroperoxid und tert.-Butylhydroperoxid und Ketonperoxide wie Cyclohexanonperoxid und Äthylmethyl-ketonperoxid.

Die erfindungsgemäßen Initiatormischungen können weitere Zusätze, z.B. Weichmacher, Lösungsmittel, Thixotropiermittel enthalten. Es ist auch möglich, die Zersetzung von Diacylperoxiden durch Amine und von Ketonperoxiden bzw. Perestern durch Cobalt- bzw. Vanadinsalze zu beschleunigen.

Im folgenden werden monomere und Monomerkombinationen angegeben, die mit dem erfindungsgemäßen Katalysatorsystem polymerisiert werden können.

A. Acryl- und Methacrylverbindungen:

Acrylsäure und Methacrylsäure;

Acrylsäure- und Methacrylsäurealkylester mit 1—18, vorzugsweise 1—8, C-Atomen in der Alkoholkomponente, wie z.B Methylacrylat, Äthylacrylat, Propylacrylat, Isopropylacrylat, n-Butyl-,

acrylat, tert.-Butylacrylat, 2-Äthylhexylacrylat, Stearylacrylat und die entsprechenden Methacrylsäureester;

Acrylsäure und Methacrylsäurecyclohexylester;

Ester der Acrylsäure und Methacrylsäure mit zweiwertigen, gesättigten, aliphatischen Alkoholen mit 2—4 C-Atomen, wie z.B. 2-Hydroxyäthylacrylat, 2-Hydroxypropylacrylat, 4-Hydroxybutylacrylat und die entsprechenden Methacrylsäureester;

vernetzend wirkende Acryl- und Methacrylverbindungen, wie z.B. Acryl- und/oder Methacrylsäureallylester, Methylenbisacrylamid, Methylenbismethacrylamid, Triacryloyl-perhydro-S-triazin, Bisacrylate bzw. Bismethacrylate von Glykolen bzw. Polyglykolen mit 2—20 C-Atomen, wie Äthylenglykoldi-(meth)-acrylat, Propylenglykoldi-(meth)-acrylat, Butylenglykol-1,4-(meth)-acrylat, Tetrāthylenglykol-di-(meth)-acrylat, Tri-(meth)-acrylate des Triäthanolamins und des Trimethyloläthans, -propans, -hexans und des Glycerins;

Acryl- und Methacrylsäurevinylester;

Acrylnitril und Methacrylnitril;

Acrylamid und Methacrylamid;

N-Methyloläther des Acrylsäure- und Methacrylsäureamids der allgemeinen Formel

$$\begin{array}{ccccc} CH_2= & C & —CO— & N & —CH_2—OR_3 \\ & | & & | & \\ & R_1 & & R_2 & \end{array}$$

in der

$R_1$ für Wasserstoff oder Methyl,

$R_2$ für Wasserstoff, Alkyl, Aralkyl oder Aryl,

$R_3$ für Alkyl oder Cycloalkyl, wie Methyl, Äthyl, n-Propyl, Isopropyl, n-Butyl, Isobutyl-Cyclohexyl stehen (vgl. deutsche Auslegeschrift 1 035 363; bevorzugt ist der N-Methylolmethyläther des Methylacrylsäureamids);

N,N-dialkylsubstituierte Acryl- und Methacrylsäureamide;

primäre, sekundäre und tertiäre Aminoalkylester der Acrylsäure und Methacrylsäure.

B. Polymerisierbare Vinyl- und Vinylidenverbindungen

Styrol; kernchlorierte und -alkylierte bzw. -alkenylierte Styrole, wobei die Alkylgruppen 1—4 Kohlenstoffatome enthalten können, wie z.B. Vinyltoluol, Divinylbenzol, $\alpha$-Methylstyrol, tert.-Butylstyrol, Chlorstyrole; Vinylester von Carbonsäuren mit 2—6 Kohlenstoffatomen, wie Vinylacetat, Vinylpropionat, Bernsteinsäuredivinylester, Vinylpyridin, Vinylnaphthalin, Vinylcyclohexan; Vinyläther wie Vinylpropyläther und Vinylisobutyläther; Maleinsäureanhydrid, -halb- und -diester mit 1—4 Kohlenstoffatomen in der Alkoholkomponente, -halb- und -diamide oder cyclische Imide wie N-Methylmaleinimid oder N-Cyclohexylmaleinimid; Allylverbindungen wie Allylbenzol und Allylester wie Allylacetat, Phthalsäurediallylester, Isophthalsäurediallylester, Malein- und Fumarsäurediallylester, Allylcarbonate, Diallylcarbonate, Diallylphenylcarbonate, Triallylphosphat, Triallylcyanurat und -isocyanurat; Isobutylvinyläther, Butandiol-1,4-divinyläther, Äthylenglykoldiallyläther, Pentaerythrittetraallyläther; Vinylpyrrolidon; Vinylchlorid, Vinylidenchlorid.

C. Äthylen

D. Konjugierte Diene wie Butadien, Isopren, Chloropren.

E. Ungesättigte Polyesterharze

Die mit den erfindungsgemäß zu verwendenden Verbindungen beschleunigten Polyesterharze bestehen aus 40—80 Gew.-% $\alpha,\beta$-äthylenisch ungesättigter Polyester und 60—20 Gew.-% damit copolymerisierbarer Vinyl- oder Vinylidenverbindungen.

$\alpha,\beta$-äthylenisch ungesättigte Polyester sind die üblichen Polykondensationsprodukte mindestens einer $\alpha,\beta$-äthylenisch ungesättigten Dicarbonsäure mit in der Regel 4 oder 5 C-Atomen oder deren esterbildenden Derivate, gegebenenfalls in Abmischung mit bis zu 90 Mol-%, bezogen auf die ungesättigten Säurekomponenten, mindestens einer aliphatischen gesättigten mit 4—10 C-Atomen oder einer cycloaliphatischen Dicarbonsäure mit 8—10 C-Atomen oder deren esterbildenden Derivate mit mindestens einer Polyhydroxyverbindung, insbesondere Dihydroxyverbindung, mit 2—8 C-Atomen — also Polyester, wie sie bei J. Björksten et al "Polyesters and their Applications" Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die zu verwendenden aliphatischen gesättigten oder cycloaliphatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw.

Bernsteinsaureanhydrid und Bernsteinsäureester und -chloride, Adipinsäure, Sebacinsäure. Um schwerentflammbare Harze herzustellen, können z.B. Hexachlorendomethylentetrahydrophthalsäure (Hetsäure), Tetrachlorphthalsäure oder Tetrabromphthalsäure verwendet werden. Bevorzugt zu verwendende Polyester enthalten Maleinsäurereste, die bis zu 25 Mol-% durch Phthalsäure- oder Isophthalsäurereste ersetzt sein können. Als zweiwertige Alkohole können Äthylenglykol, Propandiol-1,2, Propandiol-1,3, Diäthylenglykol, Dipropylenglykol, Butandiol-1,3, Butandiol-1,4, Neopentylglykol, Hexandiol-1,6, 2,2-Bis-(4-hydroxycyclohexyl)-propan, bis-oxalkyliertes Bisphenol A, Perhydrobisphenol und andere eingesetzt werden.

Weitere Modifikationen sind möglich durch Einbau bis zu 10 Mol-%, bezogen auf die Alkohol- bzw. Säurekomponente, ein-, drei- und vierwertiger Alkohole mit 1—6 C-Atomen, wie Methanol, Äthanol, Butanol, Allylalkohol, Benzylalkohol, Cyclohexanol und Tetrahydrofurfurylalkohol, Trimethylpropan, Glycerin und Pentaerythrit sowie von Mono-, Di- und Triallyläthern und Benzyläthern drei- und mehr- wertiger Alkohole mit 3 bis 6 C-Atomen gemäß DT—AS 1 024 654, sowie durch Einbau einbasischer Säuren wie Benzoesäure oder langkettiger, ungesättigter Fettsäuren wie Ölsäure, Leinölfettsäure und Ricinenfettsäure.

Die Säurezahlen der Polyester liegen in der Regel zwischen 1 und 100, vorzugsweise zwischen 20 und 70, die OH-Zahlen zwischen 10 und 150, vorzugsweise zwischen 20 und 100, und die als Zahlenmittel gemessenen Molekulargewichte $\overline{M}n$ zwischen ca. 500 und 5000, vorzugsweise zwischen ca. 1000 und 3000 (dampfdruckosmometrisch, gemessen in Dioxan und Aceton; bei differierenden Werten wird der niedrigere als der korrekte angesehen).

Als mit den ungesättigten Polyestern copolymerisierbare Vinyl-bzw. Vinylidenverbindungen eignen sich die oben unter B. aufgezählten Substanzen, vorzugsweise Styrol.

Fur ungesättigte Polyesterharze sind die erfindungsgemäßen Initiatorkombinationen besonders gut geeignet.

Im folgenden sind Teile Gewichtsteile und Prozente Gewichtsprozente.

Beispiel 1

Ein oligomerer Benzpinakolsilyläther, hergestellt durch Reaktion von Magnesium, Benzophenon und Trichlormethylsilan, wird als 70%ige Lösung in Triäthylphosphat (Initiator 1) mit den Peroxiden 1—5 in den Verhältnissen a) bis g) abgemischt. 1g ist ein Vergleichsversuch.

10g-Proben dieser Mischungen werden in ein Reagenzglas von 18 mm Durchmesser gefüllt. In diese Lösung taucht 0,5 cm tief ein Eisen-Konstantan-Thermoelement, das mit einem Temperatur-Zeitschreiber verbunden ist. Nach dem Einschalten des Meßgerätes wird das Reagenzglas in ein thermostatisiertes Ölbad gestellt. Mithilfe des Thermoelements werden die Maximaltemperatur ($T_m$) der Lösung bei der Zersetzung des Initiatorgemisches sowie die Zeit bis zum Erreichen der Maximaltemperatur ($t_H$) bestimmt.

Folgende Peroxide wurden thermisch zersetzt:

1) Dicyclohexylperoxidicarbonat (50 %iges Pulver)
2) tert.-Butylperneodecanoat (75 %ige Lösung in Aliphaten)
3) Di-benzoylperoxid (50 %ig in Weichmacher)
4) 1,1-Di-tert.-butylperoxi-3,3,5-trimethylcyclohexan (50 %ige Lösung in Dibutylphthalat)
5) tert.-Butylperbenzoat

| Peroxid | Mischung | Gew.–Tle Peroxid | Gew.–Tle peroxidfreier Initiator 1 | Zers. temp- | $T_m$ | $t_H$ |
|---|---|---|---|---|---|---|
| 1 | a | 40 | 60 | 80 | 145 | 2,0 |
| | b | 20 | 80 | 80 | 135 | 2,0 |
| | c | 10 | 90 | 80 | 110 | 3,5 |
| | d | 5 | 95 | 80 | 85 | 4,5 |
| | e | 2,5 | 97,5 | 80 | 80 | 6 |
| | f | 1,25 | 98,75 | 80 | 80 | 6 |
| | g | – | 100 | 80 | 80 | 6 |
| 2 | a | 40 | 60 | 80 | 130 | 2,5 |
| | b | 20 | 80 | 80 | 120 | 2,5 |
| | c | 10 | 90 | 80 | 95 | 3,5 |
| | d | 5 | 95 | 80 | 85 | 3,5 |
| | e | 2,5 | 97,5 | 80 | 80 | 6 |
| | f | 1,25 | 98,75 | 80 | 80 | 6 |
| 3 | a | 40 | 60 | 120 | 160 | 2,2 |
| | b | 20 | 80 | 120 | 145 | 2,8 |
| | c | 10 | 90 | 120 | 135 | 3,5 |
| | d | 5 | 95 | 120 | 126 | 5,0 |
| | e | 2,5 | 97,5 | 120 | 120 | 6,0 |
| 4 | a | 40 | 60 | 120 | 190 | 4,0 |
| | b | 20 | 80 | 120 | 145 | 4,5 |
| | c | 10 | 90 | 120 | 125 | 5,5 |
| | d | 5 | 95 | 120 | 120 | 5,0 |
| | e | 2,5 | 97,5 | 120 | 120 | 5,0 |
| 5 | a | 40 | 60 | 120 | 180 | 4,0 |
| | b | 20 | 80 | 120 | 155 | 4,0 |
| | c | 10 | 90 | 120 | 140 | 3,5 |
| | d | 5 | 95 | 120 | 130 | 3,5 |
| | e | 2,5 | 97,5 | 120 | 120 | 5,0 |

Beispiel 2

Ein ungesättigtes Polyesterharz, hergestellt aus 11 Teilen Phthalsäureanhydrid, 47 Tln Maleinsäureanhydrid und 42 Tln Propylenglykol-1,2 bei 200°C (Säurezahl 20, OH-Zahl 30, Viskosität bei 20°C: 1500 mPas), wird 66%ig in Styrol gelöst und mit 0,01 Teil Hydrochinon stabilisiert.

100g-Proben dieses ungesättigten Polyesterharzes werden mit 1,5 Gew.-Tln der Initiatormischungen 1—5 nach Beispiel 1 abgemischt und bei max. 20°C gelagert.

Eine Stunde nach der Zugabe des Initiators werden 20 g eines Harzansatzes in ein Reagenzglas von 18 mm Durchmesser gefüllt. Ein Eisen-Konstantan-Thermoelement, das mit einem Temperatur-Zeitschreiber verbunden ist, wird 3 cm tief in das Harz eingetaucht, und das zu 8 cm gefüllte Reagenzglas nach dem Einschalten des Meßgerätes in ein thermostatisiertes Ölbad gestellt. Analog DIN 16 945 werden die Härtungszeiten $t_H$ (Zeit bis zum Erreichen der Splitzentemperatur minus Zeit bis zum Überschreiten dar 65°C-Linie) /Min/ un die Spitzentemperatur $T_m$ /°C/ bestimmt

Bei den angegebenen Badtemperaturen ergeben sich folgende Werte:

| Badtemp. (°C) | 100° | | 90° | | 80° | | 70° | | 60° | |
|---|---|---|---|---|---|---|---|---|---|---|
| Initiatormischung | $t_H$ | $T_m$ | $t_H$ | $T_m$ | $t_H$ | $T_m$ | $t_H$ | $T_m$ | $t_H$ | $T_m$ |
| 1 a | 0,7 | 240 | 0,8 | 240 | 1,0 | 240 | 1,8 | 240 | 2,5 | 225 |
| b | 1,2 | >250 | 1,5 | >250 | 2,0 | 240 | 3,5 | 240 | 4,5 | 210 |
| c | 1,7 | >250 | 2.0 | >250 | 3,5 | 235 | 6,0 | 230 | 8,0 | 195 |
| d | 2,1 | >250 | 3,0 | 250 | 5,0 | 235 | 11,0 | 210 | | |
| e | 2,8 | 250 | 4,3 | 245 | 9,0 | 225 | | | | |
| f | 4,0 | 250 | 6,0 | 235 | 13,5 | 200 | | | | |
| g | 5,2 | 250 | 9,0 | 225 | 14,5 | 190 | | | | |
| 2 a | 0,7 | 240 | 0,8 | 240 | 1,3 | 245 | 2,6 | 240 | 5,0 | 220 |
| b | 1,2 | >250 | 1,7 | >250 | 2,6 | 245 | 5,0 | 235 | 10,5 | 200 |
| c | 1,8 | >250 | 2,8 | >250 | 4,5 | 245 | 7,0 | 230 | | |
| d | 2,5 | >250 | 4,0 | 245 | 6,5 | 230 | 13,5 | 205 | | |
| e | 3,5 | 250 | 5,5 | 235 | 10,0 | 220 | | | | |
| f | 5,0 | 240 | 7,2 | 230 | 14,0 | 210 | | | | |
| 3 a | 2,6 | >250 | 4,0 | >250 | 7,8 | 235 | | | | |
| b | 3,4 | >250 | 5,0 | >250 | 9,0 | 235 | | | | |
| c | 4,0 | >250 | 6,2 | 250 | 10,0 | 230 | | | | |
| d | 4,7 | 250 | 7,5 | 240 | 12,0 | 210 | | | | |
| e | 5,2 | 240 | 9,0 | 225 | 14,5 | 200 | | | | |

| Badtemp. (°C) / Initiatormischung | 120 | | 110 | | 100 | | 90 | |
|---|---|---|---|---|---|---|---|---|
| | $t_H$ | $T_m$ | $t_H$ | $T_m$ | $t_H$ | $T_m$ | $t_H$ | $T_m$ |
| 4 a | 2,0 | >250 | 2,4 | >250 | 3,0 | >250 | 6,0 | >250 |
| b | 2,3 | >250 | 2,7 | >250 | 3,5 | >250 | 7,0 | 250 |
| c | 2.5 | >250 | 3,0 | >250 | 4,0 | 250 | 7,5 | 245 |
| d | 2,8 | >250 | 3,3 | >250 | 4,5 | 245 | 8,0 | 240 |
| e | 2,8 | >250 | 3,7 | >250 | 5,0 | 245 | 8,5 | 230 |
| 5 a | 2,2 | >250 | 2,8 | >250 | 4,5 | 250 | 8,6 | 240 |
| b | 2,2 | >250 | 2,8 | >250 | 4,5 | 250 | 8,6 | 235 |
| c | 2,5 | >250 | 3,0 | >250 | 4,5 | 250 | 8,6 | 235 |
| d | 2,5 | >250 | 3,2 | >250 | 4,7 | 245 | 9,0 | 230 |
| e | 2,8 | >250 | 3,5 | >250 | 5,0 | 250 | 9,0 | 230 |
| 1 g | 2,8 | >250 | 3,7 | >250 | 5,2 | 250 | 9,0 | 225 |

Beispiel 3

Eine 75%ige Lösung von tert.-Butylperneodecanoat in Aliphaten wird mit den Initiatoren A—E abgemischt. Wie in Beispiel 1 beschrieben, wird die Maximaltemperatur ($T_m$) der Lösung bei der Zersetzung sowie die Zeit ($t_H$) bis zum Erreichen der Maximaltemperatur bestimmt.

Folgende, phlegmatisierend wirkenden Initiatoren werden mit tert.-Butylperneodecanoat (75%ig) abgemischt:

A) 50%ige Lösung von 2,2-Diphenyl-2,2-dimethylhexan in Disec.-Butylbenzol,
B) 50%ige Lösung von 2,2-Diphenyl-2,2-dimethylbutan in Isopropylbenzol,
C) 50%ige Lösung von 2,2-Diphenyl-2,2-di(chlormethyl)-butan in Isopropylbenzol,
D) 50%ige Lösung von

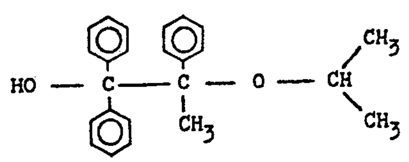

in Dimethylphthalat,
E) 50%ige Lösung Benzpinakol in Dimethylphthalat.

| Badtemperatur: 80 °C | | | | |
|---|---|---|---|---|
| Phlegmatisierungsmittel | | Gew.–Tle Peroxid | $T_m$ (°C) | $t_H$ (min) |
| Art | Gew.–Tle | | | |
| A | 90 | 10 | 105 | 3,8 |
| A | 95 | 5 | 82 | 5,0 |
| B | 90 | 10 | 105 | 4,0 |
| B | 95 | 5 | 85 | 5,5 |
| C | 90 | 10 | 102 | 4,0 |
| C | 95 | 5 | 85 | 6,0 |
| D | 90 | 10 | 107 | 3,5 |
| E | 90 | 10 | 110 | 3,5 |
| E | 95 | 5 | 82 | 6,0 |

Beispiel 4

Beispiel 2 wird wiederholt; das ungesättigte Polyesterharz wird allerdings nicht mit den Initiatormischungen 1—5, sondern mit 1,5 Gew.-Tln eines Gemisches bestehend aus tert.-Butylperneodecanoat (75%ig in Aliphaten) und einem Initiator vom Diphenyläthantyp ausgehärtet.

Zum Vergleich werden ferner Proben ausgehärtet, die nur peroxidfreie Initiatoren enthalten.

| Initiator vom Diphenyläthantyp | | | Badtemperatur (°C) | | | | | | | |
|---|---|---|---|---|---|---|---|---|---|---|
| | | | 140 | | 130 | | 120 | | 110 | |
| Gew.–Tle | Art | Gew.–Tle Peroxid | $t_H$ | $T_m$ | $t_H$ | $T_m$ | $t_H$ | $T_m$ | $t_H$ | $T_m$ |
| 90 | 2,2-Diphenyl-2,2-dimethylhexan | 10 | 1,4 | 250 | 1,6 | 250 | 1,8 | 240 | 2,0 | 225 |
| 95 | ,, | 5 | 1,5 | 250 | 2,0 | 250 | 2,7 | 240 | 3,2 | 225 |
| 100 | ,, | – | 6,9 | 250 | 11,2 | 250 | – | – | – | – |
| 90 | 2,2-Diphenyl-2,2-di(chlormethyl)-butan | 10 | 1,4 | 250 | 1,6 | 245 | 1,8 | 240 | 2,2 | 215 |
| 100 | ,, | – | 8,7 | 245 | 13,0 | 235 | – | – | – | – |
| 90 | Benzpinakol | 10 | 1,2 | 250 | 1,4 | 250 | 1,5 | 250 | 1,7 | 250 |
| 95 | ,, | 5 | 1,4 | 250 | 1,7 | 250 | 2,0 | 250 | 2,5 | 250 |
| 100 | ,, | – | 2,4 | 250 | 3,1 | 250 | 4,3 | 250 | 6,0 | 250 |

**Patentansprüche**

1. Als Initiatoren für radikalische Polymerisationen wirksame Mischungen aus
1.) 1 bis 99 Gew.-% eines substituierten Diphenyläthans, und
2.) 99 bis 1 Gew.-% eines organischen Peroxids;
2. Verfahren zuir Phlegmatisierung organischer Peroxide, dadurch gekennzeichnet, daß man 99 bis 1 Gew.-% eines organischen Peroxids mit 1 bis 99 Gew.-% eines substituierten Diphenyläthans mischt.

**Revendications**

1. Mélanges actifs en tant qu'initiateurs pour polymérisations radicalaires, se composant de
1) 1 à 99% en poids d'un diphényléthane substitué et de
2) 99 à 1% en poids d'un peroxyde organique.
2. Procédé de phlegmatisation de peroxydes organiques, caractérisé en ce qu'on mélange 99 à 1% en poids d'un peroxyde organique avec 1 à 99% en poids d'un diphényléthane substitué.

**Claims**

1. Mixtures active as initiators for radical polymerisation reactions comprising
(1) from 1 to 99%, by weight, of a substituted diphenyl ethane; and
(2) from 99 to 1%, by weight, of an organic peroxide.
2. A process for desensitising organic peroxides, characterised in that from 99 to 1%, by weight, of an organic peroxide is mixed with from 1 to 99%, by weight, of a substituted diphenyl ethane.